# EUROPÄISCHE PATENTSCHRIFT

(11) **EP 4 051 557 B1**
(45) Veröffentlichungstag und Bekanntmachung des Hinweises auf die Patenterteilung: **19.08.2026**
(21) Anmeldenummer: 20793359.9
(22) Anmeldetag: 19.10.2020
(51) Int. Cl.: B62D 25/07, B62D 25/06

(54) **DACH FÜR EIN FAHRERHAUS EINES NUTZFAHRZEUGS**
ROOF FOR A DRIVER'S CAB OF A UTILITY VEHICLE
TOIT DESTINÉ À UNE CABINE DE CONDUCTEUR D'UN VÉHICULE UTILITAIRE

(30) Priorität: 30.10.2019 DE 102019007573
(43) Veröffentlichungstag der Anmeldung: 07.09.2022
(73) Patentinhaber: MAN Truck & Bus SE, 80995 München (DE)
(72) Erfinder: SCHMITZ, Andreas, 80995 München (DE)
(74) Vertreter: v. Bezold & Partner Patentanwälte - PartG mbB
(86) Internationale Anmeldenummer: PCT/EP2020/079392
(87) Internationale Veröffentlichungsnummer: WO 2021/083711

(56) Entgegenhaltungen:
- EP-A1- 0 645 269
- EP-A1- 3 318 436
- EP-B1- 0 645 269
- JP-A- S5 690 723
- JP-U- H0 326 614

## Beschreibung

Die Erfindung betrifft ein Dach für ein Fahrerhaus eines Nutzfahrzeugs, aufweisend eine Dachlukenöffnung für eine Dachluke.

Ein Dach eines Fahrerhauses eines Nutzfahrzeugs, z. B. eines Lastkraftwagens, kann mit Dachaufbauten ausgestattet sein. Dazu gehören Antennen, Dachluken, Leuchten und Dachspoiler. Das Dach soll das Fahrerhaus vor eindringendem (Regen- oder Wasch-) Wasser schützen. Nutzfahrzeuge werden typischerweise sehr viel im Freien bewegt und sind hier allen Witterungsbedingungen auch über längere Zeiträume ausgesetzt. Dabei können die Nutzfahrzeuge auch so abgestellt werden, dass diese schief stehen können (z. B. bergauf, bergab, Bankett, Böschung, Bordstein usw.).

Beispielsweise offenbart die EP 0 645 269 A1 ein Dach eines Fahrerhauses eines Lastkraftwagens. Eine Dachluke im Fahrerhausdach weist einen Dachlukendeckel auf, der im geschlossenen Zustand auf Höhe der Dachhaut ist und ohne Überstand zu derselben versenkt angeordnet ist. Die Dachhaut weist im Mittenbereich eine Öffnung mit einer innerhalb der Dachkontur angeordneten, nach außen U-förmig konfigurierten, umlaufenden Versickung auf. Deren innerer vertikaler U-Steg ist von dem Randbereich des Dachlukendeckels unter Einschluss einer elastischen Dichtung klemmend übergriffen. Die U-förmigen Stege in der Dachhaut weisen in Fahrzeuglängsrichtung nach vorne oder nach hinten der Dachform entsprechende offene Sickenausläufe auf.

Die EP 0 645 269 A1 offenbart eine Dachluke im Fahrerhausdach eines Lkw. Der Dachlukendeckel liegt im geschlossenen Zustand auf Höhe der Dachhaut und ist ohne Überstand zu derselben versenkt angeordnet. Die Dachhaut weist im Mittenbereich eine Öffnung mit einer innerhalb der Dachkontur angeordneten, nach außen U-förmig konfigurierten, umlaufenden Versickung auf. Deren innerer vertikaler U-Steg ist von dem Randbereich des Dachlukendeckels unter Einschluss einer elastischen Dichtung klemmend übergriffen. Die U-förmigen Stege in der Dachhaut weisen in Fahrzeuglängsrichtung nach vorne und/oder nach hinten der Dachform entsprechende offene Sickenausläufe auf.

Die EP 3 318 436 A1 offenbart ein Dachsystem mit einem Trägerrahmen, das wenigstens ein Dachelement trägt, sowie mit einem Entwässerungssystem, das wenigstens eine Wasserrinne aufweist. Erfindungsgemäß ist die Wasserrinne zumindest über einen Teil ihrer Länge mit mehreren, in Längsrichtung der Wasserrinne zueinander beabstandeten Schwallschutzkörpern versehen, die jeweils über einen Teilbereich einer Breite und/oder einer Höhe der Wasserrinne erstreckt sind und zumindest einen Teilabschnitt eines Bodens der Wasserrinne frei lassen.

Ähnliche Konstruktionen sind auch aus der JP H0326614 U und JP S5690723 A bekannt.

Der Erfindung liegt die Aufgabe zu Grunde, ein alternatives und/oder verbessertes Dach für ein Fahrerhaus eines Nutzfahrzeugs zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung betrifft ein (z. B. haubenförmiges) Dach für ein Fahrerhaus eines Nutzfahrzeugs (z. B. Lastkraftwagen). Das Dach weist eine Dachlukenfläche auf, die auf einer Oberseite des Daches angeordnet ist und eine Dachlukenöffnung für eine (z. B. öffenbare) Dachluke aufweist. Das Dach weist eine Mittelfläche, die auf der Oberseite des Daches angeordnet ist (z. B. in einem Mittelbereich der Oberseite) und die Dachlukenfläche zumindest in einer U-Form umgibt. Die Dachlukenfläche ist gegenüber der Mittelfläche erhaben. Die Mittelfläche erstreckt sich durchgehend von einer Vorderkante der Oberseite des Daches zu einer Hinterkante der Oberseite des Daches. Ein Mittelschenkel der U-Form erstreckt sich durchgehend zwischen einer Hinterkante der Dachlukenfläche und der Hinterkante der Oberseite des Daches.

Vorzugsweise ermöglicht das Dach, dass (Wasch- oder Regen-) Wasser von der Dachlukenfläche auf die Mittelfläche abfließen kann. Damit kann ein Anliegen von Wasser an einer Dichtung der Dachlukenöffnung verhindert werden. Wasser auf der Mittelfläche kann wirksam nach vorne zu der Vorderkante oder nach hinten zu der Hinterkante abfließen. Die Ausführung des Mittelschenkels der Mittelfläche kann hierbei einen Wasserrückstau beim Abfließen zur Hinterkante wirksam verhindern.

In einem Ausführungsbeispiel grenzt die Mittelfläche an die Dachlukenfläche an, vorzugsweise in der U-Form. Damit kann Wasser von der Dachlukenfläche direkt auf die Mittelfläche abfließen. Beispielsweise ist ein Übergang zwischen der Dachlukenfläche und der Mittelfläche abgerundet.

In einem weiteren Ausführungsbeispiel ist die Dachlukenfläche rechteckförmig (z. B. mit abgerundeten Ecken an der Hinterkante der Dachlukenfläche).

In einem weiteren Ausführungsbeispiel ist die Mittelfläche und/oder die Dachlukenfläche im Wesentlichen eben und/oder muldenfrei. Damit kann verhindert werden, dass Wasser auf der Dachlukenfläche oder Mittelfläche stehen bleibt.

In einer Ausführungsform erstreckt sich der Mittelschenkel der U-Form durchgehend flächig und eben zwischen der (z. B. gesamten) Hinterkante der Dachlukenfläche und der Hinterkante der Oberseite des Daches, vorzugweise zum Verhindern eines Wasserrückstaus auf dem Mittelschenkel.

In einer weiteren Ausführungsform erstrecken sich beide Außenschenkel der U-Form jeweils kanalförmig entlang von entgegengesetzten Außenkanten (z. B. Längs- oder Queraußenkanten) der Dachlukenfläche bis zu der Vorderkante der Oberseite des Daches. Somit kann Wasser aus den Außenschenkeln ohne Rückstau zu der Vorderkante abfließen.

In einer weiteren Ausführungsform durchschneiden beide Außenschenkel der U-Form jeweils eine Vorderkantenwölbung des Daches, die sich entlang der Vorderkante der Oberseite des Daches erstreckt und gegenüber den Außenschenkeln erhaben ist. Somit kann Wasser aus den Außenschenkeln trotz aerodynamischer Vorderkantenwölbung ohne Rückstau zu der Vorderkante abfließen.

In einer Ausführungsvariante sind beide Außenschenkel spiegelsymmetrisch zueinander bezüglich einer vertikalen Mittellängsebene des Daches.

In einer weiteren Ausführungsvariante weist das Dach ferner einen (z. B. Mittel-) Kanal auf, der auf der Oberseite des Daches angeordnet ist und sich von einer Vorderkante der Dachlukenfläche zu der Vorderkante der Oberseite des Daches erstreckt. Der Kanal kann ermöglichen, dass auch bei großen Wassermengen eine ausreichende Wasserabfuhr zu der Vorderkante gewährleistet werden kann bzw. ein Wasserrückstau an der Vorderkante der Dachlukenfläche verhindert werden kann.

In einer Weiterbildung grenzt ein Einlass des Kanals an die Dachlukenfläche (z. B. die Vorderkante der Dachlukenfläche) an und ist gegenüber der Dachlukenfläche erhaben, sodass vorzugsweise Wasser zunächst über die Dachlukenfläche in einen Außenschenkel der Mittelfläche abfließt. So kann beispielsweise verhindert werden, dass größere Wassermengen mittig oben die Windschutzscheibe erreichen.

In einer weiteren Ausführungsvariante ist der Kanal mittig bezüglich des Daches und/oder der Dachlukenfläche angeordnet.

In einem Ausführungsbeispiel ist der Kanal muldenfrei. So kann verhindert werden, dass Wasser im Kanal stehen bleibt.

In einem weiteren Ausführungsbeispiel durchschneidet der Kanal eine Vorderkantenwölbung des Daches, die sich entlang der Vorderkante der Oberseite des Daches erstreckt und gegenüber der Dachlukenfläche erhaben ist. Somit kann Wasser aus dem Kanal trotz aerodynamischer Vorderkantenwölbung ohne Rückstau zu der Vorderkante abfließen.

In einem weiteren Ausführungsbeispiel ist die Hinterkante der Oberseite des Daches höher angeordnet als die Vorderkante der Oberseite des Daches.

In einer Ausführungsform erstreckt sich die Mittelfläche von der Hinterkante der Oberseite des Daches schräg nach unten zu der Vorderkante der Oberseite des Daches, vorzugsweise mit im Wesentlichen gleichbleibender Neigung.

Erfindungsgemäß weist das Dach ferner eine erste Außenseitenfläche auf, die auf der Oberseite des Daches angeordnet und/oder erhaben gegenüber der Mittelfläche ist und/oder sich durchgehend, vorzugsweise eben, entlang der Mittelfläche von der Vorderkante der Oberseite des Daches zu der Hinterkante der Oberseite des Daches erstreckt. Weiterhin erfindungsgemäß weist das Dach eine zweite Außenseitenfläche auf, die auf der Oberseite des Daches angeordnet und/oder erhaben gegenüber der Mittelfläche ist und/oder sich auf einer der ersten Außenfläche entgegengesetzten Seite der Mittelfläche durchgehend, vorzugsweise eben, entlang der Mittelfläche von der Vorderkante der Oberseite des Daches zu der Hinterkante der Oberseite des Daches erstreckt.

In einer Weiterbildung erstrecken sich die erste Außenseitenfläche und die zweite Außenseitenfläche von der Hinterkante der Oberseite des Daches schräg nach unten zu der Vorderkante der Oberseite des Daches, vorzugsweise mit im Wesentlichen gleichbleibender Neigung.

In einer Ausführungsvariante fallen die erste Außenseitenfläche und die zweite Außenseitenfläche zur jeweiligen Längsaußenseite des Daches hin ab, vorzugsweise mit im Wesentlichen gleichbleibender Neigung.

In einer weiteren Ausführungsvariante gehen die erste Außenseitenfläche und die zweite Außenseitenfläche eben in einen Scheitel einer Vorderkantenwölbung des Daches, die sich entlang der Vorderkante der Oberseite des Daches erstreckt, über.

In einer weiteren Ausführungsvariante ist die erste Außenseitenfläche und/oder die zweite Außenseitenfläche muldenfrei. So kann verhindert werden, dass Wasser auf den Außenseitenflächen stehen bleibt.

In einem Ausführungsbeispiel sind die erste Außenseitenfläche und die zweite Außenseitenfläche spiegelsymmetrisch zueinander bezüglich einer vertikalen Mittellängsebene des Daches.

In einem weiteren Ausführungsbeispiel weist das Dach ferner einen ersten Außenkanal, der auf einer Oberseite des Daches angeordnet und/oder vertieft gegenüber der ersten Außenseitenfläche ist und/oder sich durchgehend, vorzugsweise eben, entlang der ersten Außenseitenfläche und einer ersten Längsaußenkante des Daches von der Vorderkante der Oberseite des Daches zu der Hinterkante der Oberseite des Daches erstreckt. Vorzugsweise kann das Dach ferner einen zweiten Außenkanal aufweisen, der auf einer Oberseite des Daches angeordnet und/oder vertieft gegenüber der zweiten Außenseitenfläche ist und/oder sich durchgehend, vorzugsweise eben, entlang der zweiten Außenseitenfläche und einer zweiten Längsaußenkante des Daches von der Vorderkante der Oberseite des Daches zu der Hinterkante der Oberseite des Daches erstreckt.

In einer Weiterbildung erstreckt sich der erste Außenkanal und/oder der zweite Außenkanal von der Hinterkante der Oberseite des Daches schräg nach unten zu der Vorderkante der Oberseite des Daches, vorzugsweise mit im Wesentlichen gleichbleibender Neigung.

In einem weiteren Ausführungsbeispiel fallen der erste Außenkanal und der zweite Außenkanal zur jeweiligen Längsaußenseite des Daches hin ab, vorzugsweise mit im Wesentlichen gleichbleibender Neigung.

In einer weiteren Ausführungsform durchschneidet der erste Außenkanal und/oder der zweite Außenkanal eine Vorderkantenwölbung des Daches, die sich entlang der Vorderkante der Oberseite des Daches erstreckt, oder begrenzt diese endseitig. Somit kann Wasser aus dem Außenkanälen trotz aerodynamischer Vorderkantenwölbung ohne Rückstau zu der Vorderkante abfließen.

In einer weiteren Ausführungsform ist der erste Außenkanal und/oder der zweite Außenkanal gegenüber einen jeweiligen Längsaußenseitenwölbung des Daches, die sich entlang der jeweiligen Längsaußenseitenkante des Daches von der Vorderkante der Oberseite des Daches zu der Hinterkante der Oberseite des Daches erstreckt, vertieft. So wird der Wasserablauf hin zu der Vorderkante und der Hinterkante der Oberseite des Daches begünstigt.

In einer Ausführungsvariante ist der erste Außenkanal und/oder der zweite Außenkanal muldenfrei. So kann verhindert werden, dass Wasser in den Außenkanälen stehen bleibt.

In einer weiteren Ausführungsvariante sind der erste Außenkanal und der zweite Außenkanal spiegelsymmetrisch zueinander bezüglich einer vertikalen Mittellängsebene des Daches.

In einer weiteren Ausführungsvariante sind alle (zuvor eingeführten) Flächen (z. B. Dachlukenfläche, Mittelfläche, Außenseitenfläche) und (zuvor eingeführten) Kanäle (z. B. Kanal, Außenkanäle) auf der Oberseite des Daches so zueinander angeordnet und miteinander verbunden, dass in jeglicher Orientierung des Daches Wasser von der Dachlukenfläche weggeleitet wird und in Abhängigkeit von der Orientierung des Daches ohne Rückstau an der Vorderkante der Oberseite des Daches, der Hinterkante der Oberseite des Daches und/oder an einer oder beiden der Längsaußenkanten des Daches abfließt.

Die Erfindung betrifft auch ein Nutzfahrzeug, vorzugsweise einen Lastkraftwagen, mit einem Dach wie hierin offenbart.

Vorzugsweise beziehen sich die hierin verwendeten Begriffe "Vorderkante" und "Hinterkante" auf eine relative Anordnung bezüglich einer Vorwärtsfahrtrichtung des Nutzfahrzeugs.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines Daches eines Fahrerhauses eines Nutzfahrzeugs gemäß einem Ausführungsbeispiel der vorliegenden Offenbarung;
- Figur 2: eine Vorderansicht des beispielhaften Daches;
- Figur 3: eine Draufsicht auf das beispielhafte Dach;
- Figur 4: eine Schnittansicht entlang einer Linie D-D in Figur 3;
- Figur 5: eine Schnittansicht entlang einer Linie A-A in Figur 3;
- Figur 6: eine Schnittansicht entlang einer Linie B-B in Figur 3; und
- Figur 7: eine Schnittansicht entlang einer Linie C-C in Figur 3.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

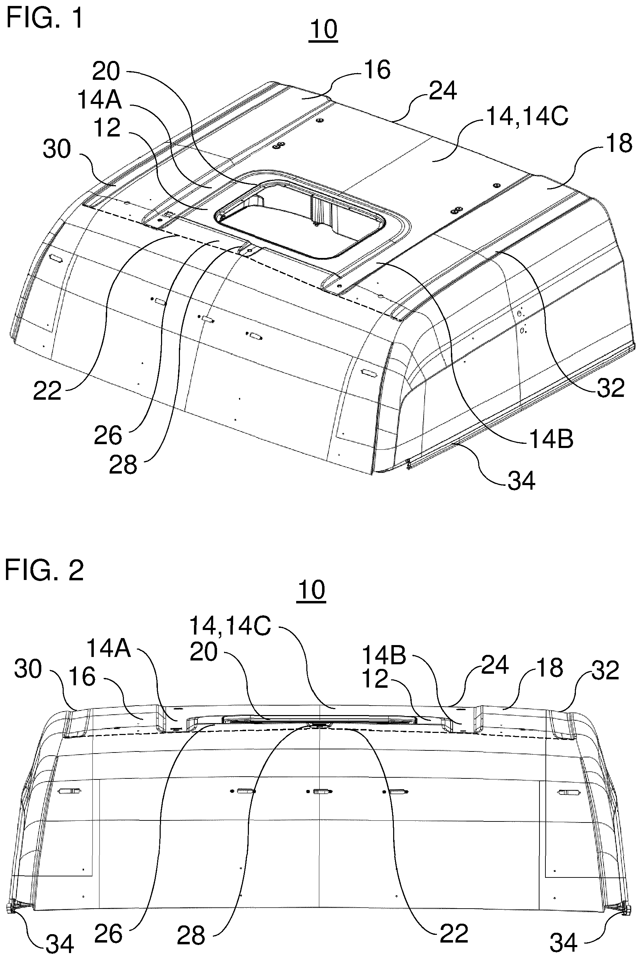

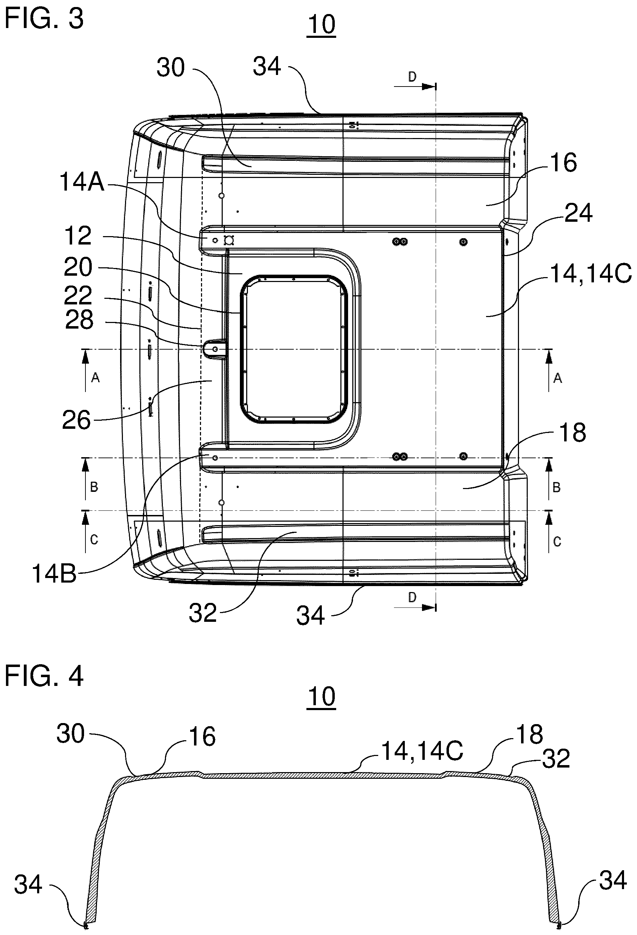

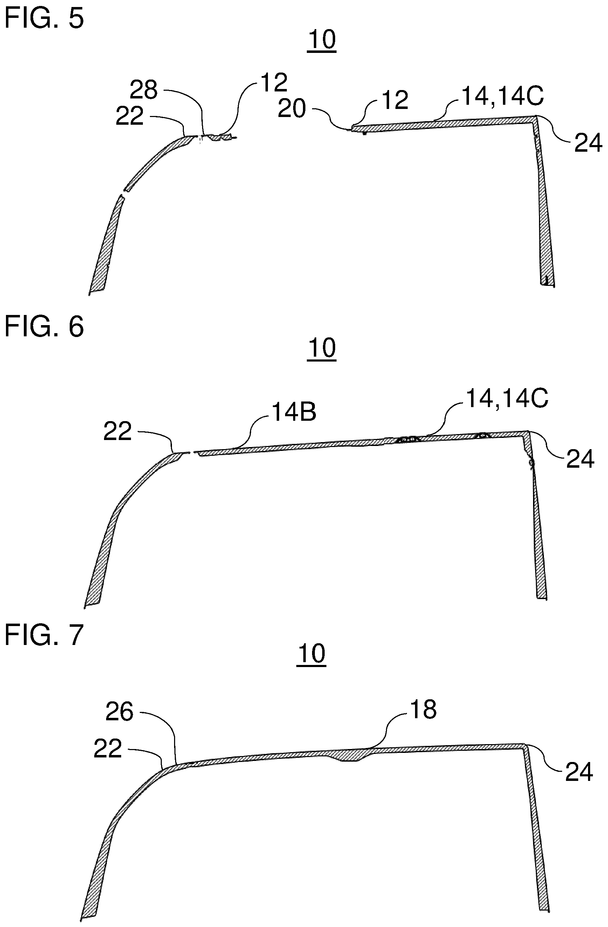

Die Figuren 1 bis 7 zeigen unterschiedliche Ansichten eines Daches 10 eines Fahrerhauses / einer Fahrerkabine eines vorzugsweise als Lastkraftwagen ausgeführten Nutzfahrzeugs. Das Dach 10 ist so ausgeführt, das in jeglicher Neigung des Daches 10 Wasser ohne Rückstau von dem Dach 10 abfließt, wie nachfolgend erläutert ist. Vorzugsweise ist das Dach 10 haubenförmig mit einer Oberseite und einer an die Oberseite angrenzenden umlaufenden Mantelfläche (umfassend eine Vorderwand, zwei Außenseitenwände und eine Rückwand) ausgeführt.

Das Dach 10 weist eine Dachlukenfläche 12, eine Mittelfläche 14, eine erste Außenseitenfläche 16 und eine zweite Außenseitenfläche 18 auf. Die Dachlukenfläche 12, die Mittelfläche 14, die erste Außenseitenfläche 16 und die zweite Außenseitenfläche 18 sind auf einer Oberseite des Daches 10 angeordnet. Bezüglich einer Querrichtung des Daches 10 bzw. des Nutzfahrzeugs sind die Dachlukenfläche 12 und die Mittelfläche 14 zwischen der ersten Außenseitenfläche 16 und der zweiten Außenseitenfläche 18 angeordnet.

Die Dachlukenfläche 12 ist mittig auf der Oberseite des Daches 10 angeordnet. Die Dachlukenfläche 12 weist eine Dachlukenöffnung 20 auf. Die Dachlukenöffnung 20 ist zentral in der Dachlukenfläche 12 angeordnet. In der Dachlukenöffnung 20 ist eine vorzugsweise zu öffnende Dachluke (nicht gezeigt) angeordnet. Die Dachluke kann beispielsweise manuell oder elektrisch geöffnet werden. Die Dachlukenfläche 12 kann eine im Wesentlichen rechteckige Form aufweisen. Die bezüglich einer Vorwärtsfahrtrichtung des Nutzfahrzeugs vorderen Ecken der Dachlukenfläche 12 können rechtwinklig sein. Die bezüglich der Vorwärtsfahrtrichtung hinteren Ecken der Dachlukenfläche 12 können abgerundet sein.

Die Dachlukenfläche 12 ist erhaben bzw. erhöht gegenüber der Mittelfläche 14. Die Dachlukenfläche 12 kann direkt an die Mittelfläche 14 angrenzen, zum Beispiel an einer Hinterkante und die daran angrenzenden Längs- bzw. Querkanten der Dachlukenfläche 12. Die Hinterkante und die daran angrenzenden Längs- bzw. Querkanten der Dachlukenfläche 12 können abgerundet in die Mittelfläche 14 übergehen.

Die Mittelfläche 14 ist mittig auf der Oberseite des Daches 10 angeordnet. Die Mittelfläche 14 umgibt die Dachlukenfläche 12 teilweise, insbesondere an der Hinterkante und daran angrenzenden Längs- bzw. Querkanten der Dachlukenfläche 12. Die Mittelfläche 14 verbindet eine Vorderkante 22 der Oberseite des Daches 10 durchgehend mit einer Hinterkante 24 der Oberseite des Daches 10.

Die Vorderkante 22 und/oder die Hinterkante 24 der Oberseite des Daches 10 kann abgerundet sein. Die Hinterkante 24 kann höher als die Vorderkante 22 angeordnet sein, sodass die Dachlukenfläche 12, die Mittelfläche 14, die erste Außenseitenfläche 16 und die zweite Außenseitenfläche 18 geneigt ausgerichtet sein können, insbesondere mit im Wesentlichen gleichbleibender Neigung.

Die Mittelfläche 14 kann insbesondere eine U-Form mit zwei Außenschenkeln 14A, 14B und einem Mittelschenkel 14C, der die zwei Außenschenkel 14A, 14B miteinander verbindet, aufweisen.

Der Mittelschenkel 14C erstreckt sich vollflächig und eben zwischen einer Hinterkante der Dachlukenfläche 12 und der Hinterkante 24. Am abgerundeten Übergang zwischen der Hinterkante der Dachlukenfläche 12 und dem Mittelschenkel 14C kann die Dachlukenfläche 12 erhaben gegenüber dem Mittelschenkel 14C sein. Damit kann Wasser von der Dachlukenfläche 12 zu dem Mittelschenkel 14C abfließen.

Der erste Außenschenkel 14A erstreckt sich kanalförmig und eben entlang einer Längs- bzw. Querkante der Dachlukenfläche 12 zum Beispiel auf einer Fahrerseite des Nutzfahrzeugs. Am abgerundeten Übergang zwischen der Längs- bzw. Querkante der Dachlukenfläche 12 und dem ersten Außenschenkel 14A ist die Dachlukenfläche 12 erhaben gegenüber dem ersten Außenschenkel 14A. Damit kann Wasser von der Dachlukenfläche 12 zu dem Mittelschenkel 14C abfließen.

Der zweite Außenschenkel 14B erstreckt sich kanalförmig und eben entlang einer dem ersten Außenschenkel 14A entgegengesetzten Längs- bzw. Querkante der Dachlukenfläche 12 zum Beispiel auf einer Beifahrerseite des Nutzfahrzeugs. Am abgerundeten Übergang zwischen der Längs- bzw. Querkante der Dachlukenfläche 12 und dem zweiten Außenschenkel 14B ist die Dachlukenfläche 12 erhaben gegenüber dem zweiten Außenschenkel 14B. Damit kann Wasser von der Dachlukenfläche 12 zu dem Mittelschenkel 14C abfließen.

Die beiden Außenschenkel 14A und 14B verbinden jeweils den Mittelschenkel 14C mit der Vorderkante 22. Hierbei können die beiden Außenschenkel 14A und 14B in einem vorderen Abschnitt eine aerodynamische Vorderkantenwölbung 26 an der Vorderkante 22 des Daches 10 durchschneiden bzw. als Täler / vertiefte Kanäle durchqueren. Die Vorderkantenwölbung 26 kann sich zwischen beiden Längsaußenseiten des Daches 10 entlang der Vorderkante 22 erstrecken. Die beiden Außenschenkel 14A und 14B können die Vorderkantenwölbung 26 zweckmäßig rechtwinklig durchschneiden. Die beiden Außenschenkel 14A und 14B können vorzugsweise spiegelsymmetrisch zueinander bezüglich einer vertikalen Mittellängsebene des Daches 10 angeordnet und ausgebildet sein.

Wasser, das von der Dachlukenfläche 12 auf die Mittelfläche 14 abfließt, kann somit je nach Orientierung des Nutzfahrzeugs vorzugsweise über die zwei Außenschenkel 14A und 14B zu der Vorderkante 22 oder über den Mittelschenkel 14C zu der Hinterkante 24 abfließen. Somit kann auch verhindert werden, dass sich Wasser im Bereich der Dachlukenfläche 12 und der Dachluke aufbauen kann, das zum Verschleiß der Dichtungen der Dachluke führen oder in die geöffnete Dachluke hineinschwappen könnte.

Ein Kanal 28 verbindet die Vorderkante 22 mit einer Vorderkante der Dachlukenfläche 12, insbesondere mittig. Ein Einlass des Kanals 28 grenzt an die Dachlukenfläche 12 an und kann gegenüber der Dachlukenfläche 12 erhaben sein. Der Einlass des Kanals 28 ist vorzugsweise mittig bezüglich der Vorderkante der Dachlukenfläche 12 angeordnet. Der Kanal 28 durchschneidet die Vorderkantenwölbung 26 des Daches 10 bzw. ist als eine Quervertiefung in der Vorderkantenwölbung 26 ausgeführt. Die Vorderkantenwölbung 26 erstreckt sich entlang der Vorderkante der Dachlukenfläche 12. Wasser von der Dachlukenfläche 12 kann somit zunächst entlang der Vorderkantenwölbung 26 zu den Außenschenkeln 14A und 14B abfließen. Erst ab Überschreiten einer gewissen Wassermenge kann der Kanal 28 von dem Wasser zum Abfließen genutzt werden.

Die erste Außenseitenfläche 16 erstreckt sich durchgehend flächig und eben von der Vorderkante 22 zu der Hinterkante 24 entlang der Mittelfläche 14, insbesondere entlang des ersten Außenschenkels 14A und des Mittelschenkels 14C. Am abgerundeten Übergang zwischen der ersten Außenseitenfläche 16 und der Mittelfläche 14 ist die erste Außenseitenfläche 16 erhaben gegenüber der Mittelfläche 14. Wasser kann somit vorzugsweise entlang des Übergangs zur ersten Außenseitenfläche 16 über den ersten Außenschenkel 14A zu der Vorderkante 22 oder über den Mittelschenkel 14C zu der Hinterkante 24 abfließen.

Die zweite Außenseitenfläche 18 erstreckt sich durchgehend flächig und eben von der Vorderkante 22 zu der Hinterkante 24 entlang der Mittelfläche 14, insbesondere entlang des zweiten Außenschenkels 14B und des Mittelschenkels 14C. Am abgerundeten Übergang zwischen der ersten Außenseitenfläche 16 und der Mittelfläche 14 ist die zweite Außenseitenfläche 18 erhaben gegenüber der Mittelfläche 14. Wasser kann somit vorzugsweise entlang des Übergangs zur ersten Außenseitenfläche 16 über den zweiten Außenschenkel 14B zu der Vorderkante 22 oder über den Mittelschenkel 14C zu der Hinterkante 24 abfließen.

Die beiden Außenseitenflächen 16 und 18 gehen jeweils eben in einen Scheitel einer Vorderkantenwölbung 26 des Daches 10 über. Die beiden Außenseitenfläche 16 und 18 fallen zur jeweiligen Längsaußenseite des Daches 10 hin ab, vorzugsweise mit im Wesentlichen gleichbleibender Neigung. Somit können die beiden Außenseitenfläche 16 und 18 bei einer entsprechenden Orientierung des Nutzfahrzeugs, das heißt bei einer Neigung um die Längsachse des Nutzfahrzeugs, Wasser von der Mittelfläche 14 in Richtung zu den Längsaußenseite des Daches 10 leiten. Vorzugsweise sind die beiden Außenseitenfläche 16 und 18 spiegelsymmetrisch zueinander bezüglich einer vertikalen Mittellängsebene des Daches 10.

Wasser auf der Außenseitenfläche 16 und 18 kann neben der Vorderkante 22 und der Hinterkante 24 auch zu einem ersten Außenkanal 30 oder einem zweiten Außenkanal 32 auf der Oberseite des Daches 10 geleitet werden.

Der erste Außenkanal 30 erstreckt sich durchgehend und eben entlang der ersten Außenseitenfläche 16 von der Vorderkante 22 zu der Hinterkante 24. Der erste Außenkanal 30 ist vertieft gegenüber der ersten Außenseitenfläche 16. Ein Übergang zwischen dem ersten Außenkanal 30 und der ersten Außenseitenfläche 16 ist abgerundet. Der erste Außenkanal 30 ist vertieft gegenüber einer angrenzenden Längsaußenseitenkante bzw. einer Längsaußenseitenwölbung der Oberseite des Daches 10.

Der zweite Außenkanal 32 erstreckt sich durchgehend und eben entlang der zweiten Außenseitenfläche 18 von der Vorderkante 22 zu der Hinterkante 24. Der zweite Außenkanal 32 ist vertieft gegenüber der zweiten Außenseitenfläche 18. Ein Übergang zwischen dem zweiten Außenkanal 32 und der zweiten Außenseitenfläche 18 ist abgerundet. Der zweite Außenkanal 32 ist vertieft gegenüber einer angrenzenden Längsaußenseitenkante bzw. einer Längsaußenseitenwölbung der Oberseite des Daches 10.

Beide Außenkanäle 30, 32 fallen zur jeweiligen Längsaußenseite des Daches 10 hin ab, vorzugsweise mit einer im Wesentlichen gleichbleibender Neigung. Beide Außenkanäle 30, 32 durchschneiden die Vorderkantenwölbung 26 des Daches 10 oder begrenzen die Vorderkantenwölbung 26 des Daches 10 jeweils an entgegengesetzten Enden der Vorderkantenwölbung 26. Vorzugsweise können beide Außenkanäle 30, 32 spiegelsymmetrisch zueinander bezüglich einer vertikalen Mittellängsebene des Daches 10 sein. Beide Außenkanäle 30, 32 führen Wasser von der von den Außenseitenfläche 16 und 18 somit vorzugsweise zu der Vorderkante 22 oder der Hinterkante 24 ab.

Oberhalb einer Fahrertür und einer Beifahrertür des Nutzfahrzeugs kann das Dach 10 noch Wasserkanäle bzw. Wasserführungen 34 aufweisen, über die Wasser, das über die Längsaußenaußenwölbung der Oberseite des Daches 10 abfließt, gesammelt und abgeleitet werden kann, ohne in die geöffnete Fahrertür oder Beifahrertür zu schwappen.

Um einen Wasserrückstau auf dem Dach 10 möglichst zu verhindern, können die Dachlukenfläche 12, die Mittelfläche 14, die Außenseitenfläche 16 und 18 und die Außenkanäle 30, 32 im Wesentlichen muldenfrei ausgeführt sein.

Es ist möglich, dass in einem oder mehreren der Flächen 14C, 16, 18 oder der Kanäle 14A 14B, 30, 32 Exterieurkomponenten (nicht dargestellt) befestigt sind. Diese Exterieurkomponenten sind vorzugweise derart angeordnet, dass sie auf der jeweiligen Fläche oder in dem jeweiligen Kanal keinen Wasserstau verursachen können. Beispielhafte Exterieurkomponenten sind Antennen, Geräteträger, Beleuchtungen, Sensorik oder Windleitelemente, wie zum Beispiel ein Dachspoiler.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen.

Der Schutzbereich wird nur durch die folgenden Ansprüche definiert.

### Bezugszeichenliste

- 10: Dach
- 12: Dachlukenfläche
- 14: Mittelfläche
- 14A: Erster Außenschenkel
- 14B: Zweiter Außenschenkel
- 14C: Mittelschenkel
- 16: Erste Außenseitenfläche
- 18: Zweite Außenseitenfläche
- 20: Dachlukenöffnung
- 22: Vorderkante
- 24: Hinterkante
- 26: Vorderkantenwölbung
- 28: Kanal
- 30: Erster Außenkanal
- 32: Zweiter Außenkanal
- 34: Wasserkanal

## Patentansprüche

1. Dach (10) für ein Fahrerhaus eines Nutzfahrzeugs, aufweisend:
eine Dachlukenfläche (12), die auf einer Oberseite des Daches (10) angeordnet ist und eine Dachlukenöffnung (20) für eine Dachluke aufweist; und
eine Mittelfläche (14), die auf der Oberseite des Daches (10) angeordnet ist und die Dachlukenfläche (12) zumindest in einer U-Form umgibt,
wobei:
die Dachlukenfläche (12) gegenüber der Mittelfläche (14) erhaben ist;
die Mittelfläche (14) sich durchgehend von einer Vorderkante (22) der Oberseite des Daches (10) zu einer Hinterkante (24) der Oberseite des Daches (10) erstreckt; und
ein Mittelschenkel (14C) der U-Form sich durchgehend zwischen einer Hinterkante der Dachlukenfläche (12) und der Hinterkante (24) der Oberseite des Daches (10) erstreckt;
**gekennzeichnet durch:**
eine erste Außenseitenfläche (16), die auf der Oberseite des Daches (10) angeordnet und erhaben gegenüber der Mittelfläche (14) ist und sich durchgehend, vorzugsweise eben, entlang der Mittelfläche (14) von der Vorderkante (22) der Oberseite des Daches (10) zu der Hinterkante (24) der Oberseite des Daches (10) erstreckt; und
eine zweite Außenseitenfläche (18), die auf der Oberseite des Daches (10) angeordnet und erhaben gegenüber der Mittelfläche (14) ist und sich auf einer der ersten Außenfläche (16) entgegengesetzten Seite der Mittelfläche (14) durchgehend, vorzugsweise eben, entlang der Mittelfläche (14) von der Vorderkante (22) der Oberseite des Daches (10) zu der Hinterkante (24) der Oberseite des Daches (10) erstreckt.

2. Dach (10) nach Anspruch 1, wobei:
die Mittelfläche (14) an die Dachlukenfläche (12) angrenzt; und/oder
die Dachlukenfläche (12) rechteckförmig ist.

3. Dach (10) nach Anspruch 1 oder Anspruch 2, wobei:
die Mittelfläche (14) und/oder die Dachlukenfläche (12) im Wesentlichen eben und/oder muldenfrei ist; und/oder
der Mittelschenkel (14C) der U-Form sich durchgehend flächig und eben zwischen der Hinterkante der Dachlukenfläche (12) und der Hinterkante (24) der Oberseite des Daches (10) erstreckt, vorzugsweise zum Verhindern eines Wasserrückstaus auf dem Mittelschenkel (14C).

4. Dach (10) nach einem der vorherigen Ansprüche, wobei:
sich beide Außenschenkel (14A, 14B) der U-Form jeweils kanalförmig entlang von entgegengesetzten Außenkanten der Dachlukenfläche (12) bis zu der Vorderkante (22) der Oberseite des Daches (10) erstrecken; und/oder
beide Außenschenkel (14A, 14B) der U-Form jeweils eine Vorderkantenwölbung (26) des Daches (10), die sich entlang der Vorderkante (22) der Oberseite des Daches (10) erstreckt und gegenüber den Außenschenkeln (14A, 14B) erhaben ist, durchschneiden; und/oder
beide Außenschenkel (14A, 14B) spiegelsymmetrisch zueinander bezüglich einer vertikalen Mittellängsebene des Daches (10) sind.

5. Dach (10) nach einem der vorherigen Ansprüche, ferner aufweisend:
einen Kanal (28), der auf der Oberseite des Daches (10) angeordnet ist und sich von einer Vorderkante der Dachlukenfläche (12) zu der Vorderkante (22) der Oberseite des Daches (10) erstreckt.

6. Dach (10) nach Anspruch 5, wobei:
ein Einlass des Kanals (28) an die Dachlukenfläche (12) angrenzt und gegenüber der Dachlukenfläche (12) erhaben ist, sodass vorzugsweise Wasser zunächst über die Dachlukenfläche (12) in einen Außenschenkel (14A, 14B) der Mittelfläche (14) abfließt; und/oder
der Kanal (28) mittig bezüglich des Daches (10) und/oder der Dachlukenfläche (12) angeordnet ist.

7. Dach (10) nach Anspruch 5 oder Anspruch 6, wobei:
der Kanal (28) muldenfrei ist; und/oder
der Kanal (28) eine Vorderkantenwölbung (26) des Daches (10), die sich entlang der Vorderkante (22) der Oberseite des Daches (10) erstreckt und gegenüber der Dachlukenfläche (12) erhaben ist, durchschneidet.

8. Dach (10) nach einem der vorherigen Ansprüche, wobei:
die Hinterkante (24) der Oberseite des Daches (10) höher angeordnet ist als die Vorderkante (22) der Oberseite des Daches (10); und/oder
die Mittelfläche (14) sich von der Hinterkante (24) der Oberseite des Daches (10) schräg nach unten zu der Vorderkante (22) der Oberseite des Daches (10) erstreckt, vorzugsweise mit im Wesentlichen gleichbleibender Neigung.

9. Dach (10) nach einem der vorherigen Ansprüche, wobei:
die erste Außenseitenfläche (16) und die zweite Außenseitenfläche (18) sich von der Hinterkante (24) der Oberseite des Daches (10) schräg nach unten zu der Vorderkante (22) der Oberseite des Daches (10) erstrecken, vorzugsweise mit im Wesentlichen gleichbleibender Neigung; und/oder
die erste Außenseitenfläche (16) und die zweite Außenseitenfläche (18) zur jeweiligen Längsaußenseite des Daches (10) hin abfallen, vorzugsweise mit im Wesentlichen gleichbleibender Neigung; und/oder
die erste Außenseitenfläche (16) und die zweite Außenseitenfläche (18) eben in einen Scheitel einer Vorderkantenwölbung (26) des Daches (10), die sich entlang der Vorderkante (22) der Oberseite des Daches (10) erstreckt, übergehen; und/oder
die erste Außenseitenfläche (18) und die zweite Außenaußenseitenfläche (18) muldenfrei sind; und/oder
die erste Außenseitenfläche (18) und die zweite Außenseitenfläche (18) spiegelsymmetrisch zueinander bezüglich einer vertikalen Mittellängsebene des Daches (10) sind.

10. Dach (10) nach einem der vorherigen Ansprüche, ferner aufweisend:
einen ersten Außenkanal (30), der auf einer Oberseite des Daches (10) angeordnet und vertieft gegenüber der ersten Außenseitenfläche (16) ist und sich durchgehend, vorzugsweise eben, entlang der ersten Außenseitenfläche (16) und einer ersten Längsaußenkante des Daches (10) von der Vorderkante (22) der Oberseite des Daches (10) zu der Hinterkante (24) der Oberseite des Daches (10) erstreckt; und
einen zweiten Außenkanal (32), der auf einer Oberseite des Daches (10) angeordnet und vertieft gegenüber der zweiten Außenseitenfläche (18) ist und sich durchgehend, vorzugsweise eben, entlang der zweiten Außenseitenfläche (18) und einer zweiten Längsaußenkante des Daches (10) von der Vorderkante (22) der Oberseite des Daches (10) zu der Hinterkante (24) der Oberseite des Daches (10) erstreckt.

11. Dach (10) nach Anspruch 10, wobei:
der erste Außenkanal (30) und der zweite Außenkanal (32) sich von der Hinterkante (24) der Oberseite des Daches (10) schräg nach unten zu der Vorderkante (22) der Oberseite des Daches (10) erstrecken, vorzugsweise mit im Wesentlichen gleichbleibender Neigung; und/oder
der erste Außenkanal (30) und der zweite Außenkanal (32) zur jeweiligen Längsaußenseite des Daches (10) hin abfallen, vorzugsweise mit im Wesentlichen gleichbleibender Neigung.

12. Dach (10) nach Anspruch 10 oder Anspruch 11, wobei:
der erste Außenkanal (30) und der zweite Außenkanal (32) eine Vorderkantenwölbung (26) des Daches (10), die sich entlang der Vorderkante (22) der Oberseite des Daches (10) erstreckt, endseitig begrenzen oder durchschneiden; und/oder
der erste Außenkanal (30) und der zweite Außenkanal (32) gegenüber einen jeweiligen Längsaußenseitenwölbung des Daches (10), die sich entlang der jeweiligen Längsaußenseitenkante des Daches (10) von der Vorderkante (22) der Oberseite des Daches (10) zu der Hinterkante (24) der Oberseite des Daches (10) erstreckt, vertieft sind; und/oder
der erste Außenkanal (30) und der zweite Außenkanal (32) muldenfrei sind; und/oder
der erste Außenkanal (30) und der zweite Außenkanal (32) spiegelsymmetrisch zueinander bezüglich einer vertikalen Mittellängsebene des Daches (10) sind.

13. Dach (10) nach einem der vorherigen Ansprüche, wobei:
alle Flächen und Kanäle auf der Oberseite des Daches (10) so zueinander angeordnet und miteinander verbunden sind, dass in jeglicher Orientierung des Daches (10) Wasser von der Dachlukenfläche (12) weggeleitet wird und in Abhängigkeit von der Orientierung des Daches (10) ohne Rückstau an der Vorderkante (22) der Oberseite des Daches (10), der Hinterkante (24) der Oberseite des Daches (10) und/oder an einer oder beiden der Längsaußenkanten des Daches (10) abfließt.

14. Nutzfahrzeug, vorzugsweise Lastkraftwagen, mit einem Dach (10) nach einem der vorhereigen Ansprüche.

## Claims

1. A roof (10) for a driver's cab of a utility vehicle, comprising:
a roof hatch face (12) which is arranged on a top side of the roof (10) and has a roof hatch opening (20) for a roof hatch; and
a central face (14) which is arranged on the top side of the roof (10) and surrounds the roof hatch face (12) at least in a U-shape,
wherein:
the roof hatch face (12) is raised relative to the central face (14);
the central face (14) extends continuously from a front edge (22) of the top side of the roof (10) to a rear edge (24) of the top side of the roof (10); and
a central leg (14C) of the U-shape extends continuously between a rear edge of the roof hatch face (12) and the rear edge (24) of the top side of the roof (10);
**characterized by:**
a first outer side face (16) which is arranged on the top side of the roof (10) and is raised relative to the central face (14) and extends continuously, preferably in a planar manner, along the central face (14) from the front edge (22) of the top side of the roof (10) to the rear edge (24) of the top side of the roof (10); and
a second outer side face (18) which is arranged on the top side of the roof (10) and is raised relative to the central face (14) and extends, on a side of the central face (14) opposite the first outer face (16), continuously, preferably in a planar manner, along the central face (14) from the front edge (22) of the top side of the roof (10) to the rear edge (24) of the top side of the roof (10).

2. The roof (10) according to Claim 1, wherein:
the central face (14) adjoins the roof hatch face (12); and/or
the roof hatch face (12) is rectangular.

3. The roof (10) according to Claim 1 or Claim 2, wherein:
the central face (14) and/or the roof hatch face (12) is substantially planar and/or trough-free; and/or
the central leg (14C) of the U-shape extends continuously flat and planar between the rear edge of the roof hatch face (12) and the rear edge (24) of the top side of the roof (10), preferably for preventing a water backup on the central leg (14C).

4. The roof (10) according to one of the preceding claims, wherein:
both outer legs (14A, 14B) of the U-shape each extend in a channel-shaped manner along opposite outer edges of the roof hatch face (12) up to the front edge (22) of the top side of the roof (10); and/or
both outer legs (14A, 14B) of the U-shape each cut through a front edge bulge (26) of the roof (10), which extends along the front edge (22) of the top side of the roof (10) and is raised relative to the outer legs (14A, 14B); and/or
both outer legs (14A, 14B) are mirror-symmetric to one another with respect to a vertical central longitudinal plane of the roof (10).

5. The roof (10) according to one of the preceding claims, further comprising:
a channel (28) which is arranged on the top side of the roof (10) and extends from a front edge of the roof hatch face (12) to the front edge (22) of the top side of the roof (10).

6. The roof (10) according to Claim 5, wherein:
an inlet of the channel (28) adjoins the roof hatch face (12) and is raised relative to the roof hatch face (12), such that preferably water initially drains off via the roof hatch face (12) into an outer leg (14A, 14B) of the central face (14); and/or
the channel (28) is arranged centrally with respect to the roof (10) and/or the roof hatch face (12).

7. The roof (10) according to Claim 5 or Claim 6, wherein:
the channel (28) is trough-free; and/or
the channel (28) cuts through a front edge bulge (26) of the roof (10), which extends along the front edge (22) of the top side of the roof (10) and is raised relative to the roof hatch face (12).

8. The roof (10) according to one of the preceding claims, wherein:
the rear edge (24) of the top side of the roof (10) is arranged higher than the front edge (22) of the top side of the roof (10); and/or
the central face (14) extends from the rear edge (24) of the top side of the roof (10) obliquely downward to the front edge (22) of the top side of the roof (10), preferably with a substantially constant inclination.

9. The roof (10) according to one of the preceding claims, wherein:
the first outer side face (16) and the second outer side face (18) extend from the rear edge (24) of the top side of the roof (10) obliquely downward to the front edge (22) of the top side of the roof (10), preferably with a substantially constant inclination; and/or
the first outer side face (16) and the second outer side face (18) slope down toward the respective longitudinal outer side of the roof (10), preferably with a substantially constant inclination; and/or
the first outer side face (16) and the second outer side face (18) transition in a planar manner into an apex of a front edge bulge (26) of the roof (10), which extends along the front edge (22) of the top side of the roof (10); and/or
the first outer side face (18) and the second outer side face (18) are trough-free; and/or
the first outer side face (18) and the second outer side face (18) are mirror-symmetric to one another with respect to a vertical central longitudinal plane of the roof (10).

10. The roof (10) according to one of the preceding claims, further comprising:
a first outer channel (30) which is arranged on a top side of the roof (10) and is recessed relative to the first outer side face (16) and extends continuously, preferably in a planar manner, along the first outer side face (16) and a first longitudinal outer edge of the roof (10) from the front edge (22) of the top side of the roof (10) to the rear edge (24) of the top side of the roof (10); and
a second outer channel (32) which is arranged on a top side of the roof (10) and is recessed relative to the second outer side face (18) and extends continuously, preferably in a planar manner, along the second outer side face (18) and a second longitudinal outer edge of the roof (10) from the front edge (22) of the top side of the roof (10) to the rear edge (24) of the top side of the roof (10).

11. The roof (10) according to Claim 10, wherein:
the first outer channel (30) and the second outer channel (32) extend from the rear edge (24) of the top side of the roof (10) obliquely downward to the front edge (22) of the top side of the roof (10), preferably with a substantially constant inclination; and/or
the first outer channel (30) and the second outer channel (32) slope down toward the respective longitudinal outer side of the roof (10), preferably with a substantially constant inclination.

12. The roof (10) according to Claim 10 or Claim 11, wherein:
the first outer channel (30) and the second outer channel (32) delimit at the end, or cut through, a front edge bulge (26) of the roof (10) which extends along the front edge (22) of the top side of the roof (10); and/or
the first outer channel (30) and the second outer channel (32) are recessed relative to a respective longitudinal outer side bulge of the roof (10) which extends along the respective longitudinal outer side edge of the roof (10) from the front edge (22) of the top side of the roof (10) to the rear edge (24) of the top side of the roof (10); and/or
the first outer channel (30) and the second outer channel (32) are trough-free; and/or
the first outer channel (30) and the second outer channel (32) are mirror-symmetric to one another with respect to a vertical central longitudinal plane of the roof (10).

13. The roof (10) according to one of the preceding claims, wherein:
all faces and channels on the top side of the roof (10) are arranged relative to one another and connected to one another in such a way that, in any orientation of the roof (10), water is directed away from the roof hatch face (12) and, depending on the orientation of the roof (10), drains off without backup at the front edge (22) of the top side of the roof (10), the rear edge (24) of the top side of the roof (10) and/or at one or both of the longitudinal outer edges of the roof (10).

14. A utility vehicle, preferably truck, having a roof (10) according to one of the preceding claims.

## Revendications

1. Toit (10) pour une cabine d'un véhicule utilitaire, présentant
une surface (12) de lucarne qui est agencée sur une face supérieure du toit (10) et qui présente une ouverture (20) de lucarne pour une lucarne ; et
une surface centrale (14) qui est agencée sur la face supérieure du toit (10) et qui entoure la surface (12) de lucarne au moins en forme de U,
dans lequel :
la surface (12) de lucarne est surélevée par rapport à la surface centrale (14) ;
la surface centrale (14) s'étend en continu depuis un bord avant (22) de la face supérieure du toit (10) vers un bord arrière (24) de la face supérieure du toit (10) ; et
une branche centrale (14C) de la forme de U s'étend en continu entre un bord arrière de la surface (12) de lucarne et le bord arrière (24) de la face supérieure du toit (10) ;
**caractérisé par**
une première surface latérale externe (16) qui est agencée sur la face supérieure du toit (10) et qui est surélevée par rapport à la surface centrale (14) et qui s'étend en continu, de préférence de manière plane, le long de la surface centrale (14) depuis le bord avant (22) de la face supérieure du toit (10) vers le bord arrière (24) de la face supérieure du toit (10) ; et
une seconde surface latérale externe (18) qui est agencée sur la face supérieure du toit (10) et qui est surélevée par rapport à la surface centrale (14) et qui s'étend sur un côté opposé à la première surface externe (16) de la surface centrale (14) en continu, de préférence de manière plane, le long de la surface centrale (14) depuis le bord avant (22) de la face supérieure du toit (10) vers le bord arrière (24) de la face supérieure du toit (10).

2. Toit (10) selon la revendication 1, dans lequel :
la surface centrale (14) est adjacente à la surface (12) de lucarne ; et/ou
la surface (12) de lucarne est rectangulaire.

3. Toit (10) selon la revendication 1 ou la revendication 2, dans lequel :
la surface centrale (14) et/ou la surface (12) de lucarne est/sont sensiblement plane(s) et/ou exempte(s) de creux ; et/ou
la branche centrale (14C) de la forme de U s'étend à plat et de manière plane en continu entre le bord arrière de la surface (12) de lucarne et le bord arrière (24) de la face supérieure du toit (10), de préférence en vue d'empêcher une accumulation d'eau sur la branche centrale (14C).

4. Toit (10) selon l'une des revendications précédentes, dans lequel :
les deux branches externes (14A, 14B) de la forme de U s'étendent à chaque fois sous forme de canal le long de bords externes opposés de la surface (12) de lucarne jusqu'au bord avant (22) de la face supérieure du toit (10) ; et/ou
les deux branches externes (14A, 14B) de la forme de U recoupent à chaque fois une courbure (26) de bord avant du toit (10), qui s'étend le long du bord avant (22) de la face supérieure du toit (10) et qui est surélevée par rapport aux branches externes (14A, 14B) ; et/ou
les deux branches externes (14A, 14B) présentent une symétrie spéculaire l'une par rapport à l'autre par rapport à un plan longitudinal central vertical du toit (10).

5. Toit (10) selon l'une des revendications précédentes, présentant en outre :
un canal (28), qui est agencé sur la face supérieure du toit (10) et qui s'étend depuis un bord avant de la surface (12) de lucarne vers le bord avant (22) de la face supérieure du toit (10).

6. Toit (10) selon la revendication 5, dans lequel :
une entrée du canal (28) est adjacente à la surface (12) de lucarne et est surélevée par rapport à la surface (12) de lucarne de telle sorte que l'eau s'écoule d'abord par l'intermédiaire de la surface (12) de lucarne dans une branche externe (14A, 14B) de la surface centrale (14) ; et/ou
le canal (28) est agencé au centre par rapport au toit (10) et/ou par rapport à la surface (12) de lucarne.

7. Toit (10) selon la revendication 5 ou la revendication 6, dans lequel :
le canal (28) est exempt de creux ; et/ou
le canal (28) recoupe une courbure (26) de bord avant du toit (10), qui s'étend le long du bord avant (22) de la face supérieure du toit (10) et qui est surélevée par rapport à la surface (12) de lucarne.

8. Toit (10) selon l'une des revendications précédentes, dans lequel :
le bord arrière (24) de la face supérieure du toit (10) est agencé à un niveau supérieur à celui du bord avant (22) de la surface du toit (10) ; et/ou
la surface centrale (14) s'étend depuis le bord arrière (24) de la face supérieure du toit (10) en biais vers le bas vers le bord avant (22) de la face supérieure du toit (10), de préférence avec une pente restant sensiblement identique.

9. Toit (10) selon l'une des revendications précédentes, dans lequel :
la première surface latérale externe (16) et la seconde surface latérale externe (18) s'étendent depuis le bord arrière (24) de la face supérieure du toit (10) en biais vers le bas vers le bord avant (22) de la face supérieure du toit (10), de préférence avec une pente restant sensiblement identique ; et/ou
la première surface latérale externe (16) et la seconde surface latérale externe (18) descendent vers le côté externe longitudinal respectif du toit (10), de préférence avec une pente restant sensiblement identique ; et/ou
la première surface latérale externe (16) et la seconde surface latérale (18) latérale passent de manière plane à un sommet d'une courbure (26) de bord avant du toit (10), qui s'étend le long du bord avant (22) de la face supérieure du toit (10) ; et/ou
la première surface latérale externe (18) et la seconde surface latérale externe (18) sont exemptes de creux ; et/ou
la première surface latérale externe (18) et la seconde surface latérale externe (18) présentent une symétrie spéculaire l'une par rapport à l'autre par rapport à un plan longitudinal central vertical du toit (10).

10. Toit (10) selon l'une des revendications précédentes, présentant en outre :
un premier canal externe (30), qui est agencé sur une face supérieure du toit (10) et qui est en creux par rapport à la première surface latérale externe (16) et qui s'étend en continu, de préférence de manière plane, le long de la première surface latérale externe (16) et d'un premier bord externe longitudinal du toit (10) depuis le bord avant (22) de la face supérieure du toit (10) vers le bord arrière (24) de la face supérieure du toit (10) ; et
un second canal externe (32), qui est agencé sur une face supérieure du toit (10) et qui est en creux par rapport à la seconde surface latérale externe (18) et qui s'étend en continu, de préférence de manière plane, le long de la seconde surface latérale externe (18) et d'un second bord externe longitudinal du toit (10) depuis le bord avant (22) de la face supérieure du toit (10) vers le bord arrière (24) de la face supérieure du toit (10).

11. Toit (10) selon la revendication 10, dans lequel :
le premier canal externe (30) et le second canal externe (32) s'étendent depuis le bord arrière (24) de la face supérieure du toit (10) en biais vers le bas vers le bord avant (22) de la face supérieure du toit (10), de préférence avec une pente restant sensiblement identique ; et/ou
le premier canal externe (30) et le second canal externe (32) descendent vers le côté externe longitudinal respectif du toit (10), de préférence avec une pente restant sensiblement identique.

12. Toit (10) selon la revendication 10 ou la revendication 11, dans lequel :
le premier canal externe (30) et le second canal externe (32) délimitent ou recoupent côté extrémité une courbure (26) du bord avant du toit (10), qui s'étend le long du bord avant (22) de la face supérieure du toit (10) ; et/ou
le premier canal externe (30) et le second canal externe (32) sont en creux par rapport à une courbure latérale externe longitudinale respective du toit (10), qui s'étend le long du bord latéral externe longitudinal respectif du toit (10) depuis le bord avant (22) de la face supérieure du toit (10) vers le bord arrière (24) de la face supérieure du toit (10) ; et/ou
le premier canal externe (30) et le second canal externe (32) sont exempts de creux ; et/ou
le premier canal externe (30) et le second canal externe (32) présentent une symétrie spéculaire l'un par rapport à l'autre par rapport à un plan longitudinal central vertical du toit (10).

13. Toit (10) selon l'une des revendications précédentes, dans lequel :
toutes les surfaces et tous les canaux sur la face supérieure du toit (10) sont agencés les uns par rapport aux autres et reliés les uns aux autres de telle sorte que dans chaque orientation du toit (10) l'eau est évacuée de la surface (12) de lucarne et s'écoule, en fonction de l'orientation du toit (10) sans accumulation au niveau du bord avant (22) de la face supérieure du toit (10), du bord arrière (24) de la face supérieure du toit (10) et/ou au niveau de l'un ou des deux des bords externes longitudinaux du toit (10).

14. Véhicule utilitaire, de préférence en poids lourd, présentant un toit (10) selon l'une des revendications précédentes.
